# DEMANDE DE BREVET EUROPEEN

(11) **EP 2 899 068 A1**
(43) Date de publication de la demande: **29.07.2015**
(21) Numéro de dépôt: 15152264.6
(22) Date de dépôt: 23.01.2015
(51) Int. Cl.: B60Q 1/30, F21S 8/10, F21S 2/00, F21V 21/005, F21V 23/00, E05D 11/06

(54) **Dispositif lumineux de véhicule modulable**

(30) Priorité: 24.01.2014 FR 1450630
(71) Demandeur: Valeo Vision Belgique, 7822 Meslin l'Evêque (BE)
(72) Inventeur: Delourme, Jean-François, 7822 Meslin l'Eveque (BE); Gons, Marianne, 7822 Meslin l'Eveque (BE)

(57) **Abrégé**

L'invention se rapporte à un dispositif lumineux (1) de véhicule comprenant un élément (20) composé de plusieurs portions (2,3) présentant chacune une surface fonctionnelle (4,5), au moins deux portions (2,3) consécutives étant reliées entre elles par une articulation.

La principale caractéristique d'un dispositif lumineux selon l'invention, est que chaque articulation permet le déplacement desdites deux portions (2,3) consécutives jusqu'à ce que leurs surfaces fonctionnelles (4,5) viennent en continuité l'une de l'autre.

## Description

Dispositif lumineux de véhicule modulable. Un tel dispositif lumineux peut, par exemple, être utilisé comme feu d'éclairage ou feu de signalisation. Il peut également servir par exemple de feu stop, pour signaler à un automobiliste placé derrière le véhicule, une phase de freinage dudit véhicule. Le terme « modulable » signifie que le dispositif lumineux peut se décliner en plusieurs versions, liées à ses dimensions.

Les dispositifs lumineux en plusieurs portions existent et ont déjà fait l'objet de brevets. On peut, par exemple, citer le brevet FR2790541, qui se rapporte à un dispositif lumineux tel qu'un feu de signalisation, et qui peut être réalisé en plusieurs tronçons de plaque translucide. Ces différents tronçons sont raccordés entre eux par embrèvement, qui est un mode de fixation susceptible d'engendrer des jeux entre les différents tronçons. Or, de tels jeux présentent l'inconvénient de pouvoir influer localement sur la trajectoire des faisceaux lumineux émis par le dispositif, et de pouvoir fragiliser la tenue mécanique dudit dispositif. De plus, de tels jeux peuvent également dégrader le rendu visuel du dispositif et donc celui du véhicule.

Les dispositifs lumineux de véhicule selon l'invention sont réalisés en au moins deux portions, et s'affranchissent des principaux inconvénients relevés dans l'état de la technique.

L'invention a pour objet un dispositif lumineux de véhicule comprenant un élément composé de plusieurs portions présentant chacune une surface fonctionnelle, au moins deux portions consécutives étant reliées entre elles par une articulation.

La principale caractéristique d'un dispositif lumineux selon l'invention est que chaque articulation permet le déplacement desdites deux portions consécutives, jusqu'à ce que leurs surfaces fonctionnelles viennent en continuité l'une de l'autre. Grâce à un alignement des surfaces fonctionnelles des portions constituant l'élément du dispositif lumineux, ledit élément va pouvoir assurer sa fonction au sein du dispositif lumineux, avec la même précision et avec la même rigueur que s'il était monobloc. Le terme « en continuité » signifie que les deux portions consécutives ne vont induire aucun jeu entre elles, susceptible d'introduire un écart de niveau visible entre leurs surfaces fonctionnelles. En étant réalisé en au moins deux portions, un tel élément peut avoir des dimensions très importantes. En effet, il suffit d'ajouter le nombre de portions nécessaires pour obtenir un élément de la taille voulue.

En résumant, le fait de réaliser un élément en au moins deux portions ayant leurs surfaces fonctionnelles en parfaite continuité l'une de l'autre, permet d'obtenir deux effets techniques majeurs :
- L'élément du dispositif lumineux peut être de dimension variable, en fonction du nombre et de la taille des portions qui le composent. Cet élément peut ainsi occuper une multiplicité de fonctions au sein d'un véhicule,
- Une possibilité d'obtenir un élément de taille importante ayant les propriétés recherchées. En effet, les techniques habituellement utilisées ne permettent pas de fabriquer des éléments monoblocs de grande taille, car elles nécessiteraient des moules de dimensions trop élevées et/ou des usures prématurées d'outils, tels que des fraiseuses, qu'il faudrait renouveler en cours de procédé.

Selon une réalisation de l'invention, le déplacement desdites deux portions consécutives se fait jusqu'à ce que leurs surfaces fonctionnelles viennent en tangence l'une par rapport à l'autre.

Selon une réalisation de l'invention, le déplacement relatif entre les deux portions consécutives ne peut pas se prolonger au-delà d'une position seuil pour laquelle les surfaces fonctionnelles sont alignées. Le déplacement de chaque portion peut s'effectuer, soit par rotation, soit par translation, soit par une combinaison de ces deux mouvements.

Selon une réalisation de l'invention, lesdites deux portions consécutives sont montées en rotation, à savoir que les portions consécutives une fois montées sont libres en rotation. Dans un exemple, la rotation entre les deux portions consécutives ne peut pas se prolonger au-delà d'une position seuil pour laquelle les surfaces fonctionnelles sont alignées. Selon un exemple non limitatif, une butée mécanique peut avantageusement bloquer le mouvement de rotation des deux portions consécutives. Par exemple, la butée peut se faire directement sur le flanc des deux portions consécutives.

De façon préférentielle, lesdites deux portions consécutives sont allongées et sont disposées les unes par rapport aux autres de manière à ce que leurs axes longitudinaux soient parallèles, et de manière à ce que toutes lesdites deux portions consécutives soient en continuité l'une de l'autre. Pour cette configuration, l'élément final a plutôt une géométrie effilée.

Préférentiellement, chaque articulation est réalisée au moyen de la pénétration d'un pion appartenant à l'une des deux portions consécutives, dans un évidement de l'autre portion consécutive adjacente. Selon une réalisation de l'invention, le pion est moulé avec le reste de la portion. Il s'agit d'une configuration simplifiée, car elle ne met pas en oeuvre une charnière rapportée nécessitant l'utilisation de moyens de fixation particuliers et d'un outillage approprié.

De façon avantageuse, la pénétration du pion dans l'évidement ne peut être réalisée que pour une position relative donnée entre les deux portions consécutives, et pour laquelle lesdites portions consécutives font entre elles un angle prédéterminé. En effet, le pion et l'évidement ne présentent des profils complémentaires, que pour une position angulaire donnée entre les deux portions consécutives impliquées. Autrement dit, le pion et l'évidement ont des géométries asymétriques, qui ne se correspondent réellement que pour une position relative donnée entre lesdites deux portions consécutives. Pour toutes les autres positions, la section de passage de l'évidement est inférieure à la section transversale du pion, empêchant ainsi la pénétration dudit pion dans ledit évidement.

Selon une réalisation de l'invention, l'angle prédéterminé est compris entre 90° et 160°. De cette manière, la manipulation des deux portions consécutives pour permettre à leurs surfaces fonctionnelles d'être en continuité, devient aisée et bien maitrisée.

De façon préférentielle, le pion est placé à une extrémité d'une portion consécutive et l'évidement est placé à une extrémité de l'autre portion consécutive, qui lui est adjacente. Ainsi, lorsque l'élément est dans une configuration pour laquelle les surfaces fonctionnelles des deux portions consécutives sont en continuité l'une de l'autre, lesdites portions ne se chevauchent pas. La longueur dudit élément correspond alors à la somme des longueurs des portions le constituant.

Préférentiellement, l'élément est obtenu au moyen d'un premier mouvement de translation pour permettre la pénétration du pion dans l'évidement, puis par un deuxième mouvement de rotation autour dudit pion. De cette manière, la pénétration du pion dans l'évidement permet de relier entre elles les deux portions consécutives, et la mise en rotation desdites portions permet d'amener leurs surfaces fonctionnelles en continuité l'une de l'autre. Grâce à ces deux composantes de mouvement entre deux portions consécutives, les surfaces fonctionnelles sont amenées en continuité l'une de l'autre, avec fiabilité et maitrise. Selon une réalisation de l'invention, le deuxième mouvement de rotation autour dudit pion se fait jusqu'à faire affleurer les surfaces fonctionnelles desdites parties, notamment pour qu'elles viennent en tangence l'une par rapport à l'autre.

De façon avantageuse, l'élément est un élément optique. Un élément optique peut par exemple être constitué d'un miroir réfléchissant ou d'une paroi destinée à être traversée par des rayons lumineux, notamment une paroi translucide ou transparente.

Selon une réalisation de l'invention, chaque portion est constituée par un module de Fresnel. Le module de Fresnel peut comprendre des miroirs de Fresnel aptes à réfléchir la lumière. Alternativement, le module de Fresnel peut comprendre des lentilles de Fresnel aptes à transmettre la lumière.

De façon préférentielle, la surface fonctionnelle est un dioptre apte à être traversé par des rayons lumineux. Il est important que l'élément possède un dioptre résultant homogène, impliquant un alignement quasi-parfait des dioptres des portions dudit élément.

Préférentiellement, ledit dispositif comprend une pluralité de sources lumineuses réparties le long de l'élément optique et destinées à éclairer ladite surface fonctionnelle. Selon une réalisation de l'invention, les sources lumineuses sont équitablement réparties le long de l'élément optique, de manière à ce que la surface fonctionnelle résultante dudit élément, soit éclairée de façon homogène. Par exemple, les sources lumineuses peuvent être réparties à égales distance les unes des autres.

De façon avantageuse, chaque portion comprend une carte de circuit imprimé.

Selon une réalisation de l'invention, lesdites cartes sont connectées électriquement entre elles.

De façon préférentielle, les cartes de circuit imprimé comprennent des sources lumineuses.

Préférentiellement, les sources lumineuses sont des diodes électroluminescentes.

De façon avantageuse, lesdites deux portions consécutives de l'élément sont maintenues dans une position pour laquelle leurs surfaces fonctionnelles sont en continuité l'une de l'autre, par l'intermédiaire d'au moins un organe de verrouillage mécanique situé au niveau de l'articulation. Le dispositif lumineux étant destiné à être embarqué dans un véhicule, il subira notamment les vibrations inhérentes au fonctionnement du véhicule. Il est donc nécessaire de maintenir l'élément dans une position fonctionnelle, sans risque de voir ses portions constitutives se déplacer sous l'effet desdites vibrations. Préférentiellement, l'organe de verrouillage est une pièce pouvant être mise en oeuvre par rotation ou par coulissement pour figer la position relative des deux portions consécutives de l'élément.

Selon une réalisation de l'invention, chaque organe de verrouillage est constitué par un clip. Un clip est un système de verrouillage rapide et simple à mettre en oeuvre, et qui présente une bonne fiabilité.

Selon une réalisation de l'invention, chaque organe de verrouillage est constitué par une agrafe. Par exemple, chaque portion consécutive peut comprendre au moins une nervure ou au moins une patte en saillie. Les nervures ou les pattes de chaque portion consécutive se rapprochent ou viennent en contact en fin de déplacement des deux portions, puis l'agrafe enserre les nervures ou les pattes des deux portions consécutives.

Selon une réalisation de l'invention, chaque organe de verrouillage est constitué par une barre. Par exemple, chaque portion consécutive peut comprendre au moins un crochet, le crochet pouvant être un élément à section en « U » ou en « L ». En fin de déplacement des deux portions, la barre est placée dans les crochets d'au moins deux portions consécutives.

De façon préférentielle, le dispositif lumineux selon l'invention, comprend un boitier support, lesdites portions constitutives de l'élément étant fixées dans ledit boitier, lorsqu'elles sont reliées entre elles dans une position pour laquelle leurs surfaces fonctionnelles sont en continuité. Selon une réalisation de l'invention, ce boitier est constitué d'au moins une paroi. Ce boitier a une double fonction : d'une part, il protège l'élément du dispositif lumineux, et d'autre part, il sert de support d'ancrage aux portions consécutives dudit élément, pour les empêcher de bouger et donc de s'écarter de leurs positions pour laquelle leurs surfaces fonctionnelles sont en continuité.

Préférentiellement, la fixation des portions consécutives dans le boitier s'effectue par encliquetage. L'encliquetage est un moyen de fixation simple et rapide à utiliser, et qui présente un bon niveau de fiabilité.

L'invention a pour deuxième objet un procédé de montage d'un dispositif lumineux selon l'invention.

La principale caractéristique d'un procédé selon l'invention est qu'il comprend les étapes suivantes :
- une étape d'emboitement en translation d'une première portion dans une deuxième portion adjacente comprenant chacune une surface fonctionnelle, lesdites portions faisant entre elles un angle prédéterminé pour réaliser ledit emboitement,
- une étape de mise en rotation desdites portions de manière à amener en continuité lesdites surfaces fonctionnelles.

De cette manière, l'étape d'emboitement permet de relier deux portions consécutives entre elles, et l'étape de mise en rotation permet d'aligner les surfaces fonctionnelles desdites portions.

Selon une réalisation de l'invention, ledit procédé comprend en outre une étape de verrouillage desdites portions consécutives, dans une position pour laquelle leurs surfaces fonctionnelles sont en continuité l'une de l'autre. Il est important que les portions consécutives de l'élément du dispositif lumineux n'aient pas une position fluctuante, sous l'effet de sollicitations telles que par exemple des vibrations, sous peine de rendre ledit dispositif inopérant.

L'invention a pour troisième objet un feu de signalisation de véhicule comprenant un dispositif lumineux conforme à l'invention.

L'invention a pour quatrième objet un feu d'éclairage intérieur d'un véhicule comprenant un dispositif lumineux conforme à l'invention.

L'invention a pour cinquième objet un projecteur d'un véhicule comprenant un dispositif lumineux conforme à l'invention, notamment comprenant un feu de position diurne, encore appelé DRL (pour « Daytime Running Light »).

Un dispositif lumineux de véhicule selon l'invention, présente l'avantage d'être modulable en fonction du nombre et de la taille des portions qui le composent. Il peut donc être fabriqué de façon ajustée, pour répondre à un besoin spécifique d'éclairage ou de signalisation dans un véhicule. Il a de plus l'avantage de pouvoir être de grande taille, pour par exemple assurer une fonction de feu stop étalée au niveau de l'habitacle du véhicule, ce que les techniques actuelles de fabrication n'arrivent pas à fournir. Il a enfin l'avantage d'être d'un coût constant par rapport à un dispositif lumineux existant et remplissant la même fonction, car il est mis en oeuvre au moyen d'un nombre restreint de pièces fabriquées conventionnellement par moulage.

On donne ci-après une description détaillée d'un mode de réalisation préféré d'un dispositif lumineux selon l'invention, en se référant aux figures 1 à 6.
- La figure 1 est une vue en perspective d'un dispositif lumineux selon l'invention,
- La figure 2 est une vue en perspective d'une extrémité de l'une des portions d'un élément d'un dispositif lumineux selon l'invention, ladite extrémité étant dotée d'un pion,
- La figure 3 est une vue en perspective d'une extrémité de l'une des portions d'un élément d'un dispositif lumineux selon l'invention, ladite extrémité étant dotée d'un évidement destiné à recevoir le pion de la portion illustrée à la figure 2,
- La figure 4A est une vue en perspective de deux portions d'un élément d'un dispositif lumineux selon l'invention, lors d'une première phase d'un procédé d'assemblage desdites portions,
- La figure 4B est une vue en perspective des deux portions de la figure 4A, lors d'une deuxième phase d'assemblage desdites portions,
- La figure 4C est une vue en perspective des deux portions des figures 4A et 4B, lors d'une phase ultime d'assemblage desdites portions,
- La figure 5 est une vue en perspective selon un premier angle d'une zone de liaison entre deux portions d'un élément d'un dispositif lumineux selon l'invention, ledit élément étant monté,
- La figure 6 est une vue en perspective selon un deuxième angle d'une zone de liaison entre deux portions d'un élément d'un dispositif lumineux selon l'invention, ledit élément étant monté.

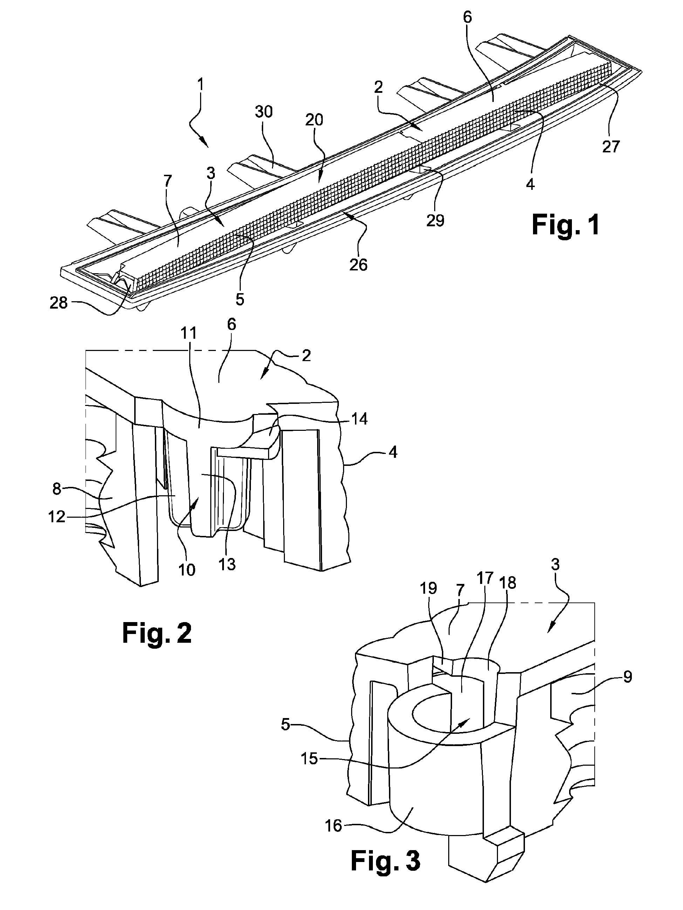

En se référant à la figure 1, un dispositif lumineux 1 selon l'invention peut, par exemple, être constitué d'un feu de signalisation de type feu stop surélevé, placé à l'arrière de l'habitacle d'un véhicule. Un tel feu stop 1 présente la particularité structurelle d'être étendu selon un axe transversal du véhicule, sur une longueur pouvant correspondre à plus de la moitié de la largeur dudit véhicule. Un tel feu stop est également connu sous la dénomination CHMSL (de l'anglais *Centered High Mounted Stop Lamp*).

Un feu stop 1 selon l'invention possède un élément optique 20 réalisé en deux portions 2,3 comprenant chacune une surface fonctionnelle 4,5, lesdites portions étant reliées l'une à l'autre de sorte que lesdites surfaces fonctionnelles 4,5 soient parfaitement alignées l'une sur l'autre, sans laisser apparaitre le moindre jeu entre elles. Chacune desdites portions 2,3 est constituée par un module de Fresnel, et chaque surface fonctionnelle 4,5 est un dioptre apte à être traversé par des rayons lumineux. Le terme « surface » doit être interprété comme « paroi ». Chaque dioptre 4,5 est donc constitué d'une paroi sensiblement plane, possédant une multiplicité de reliefs unitaires bombés, de manière à produire des points lumineux lorsque ce dioptre 4,5 est éclairé par une source lumineuse. Chaque portion 2,3 est allongée et est de forme effilée.

Un dioptre 4,5 est prolongé au niveau de l'un de ses bords allongés, par une paroi secondaire plane 6,7, dont la longueur est sensiblement équivalente à celle dudit dioptre 4,5. Cette paroi secondaire 6,7 est perpendiculaire au dioptre 4,5 et est elle-même prolongée par une surface arrière 8,9, qui est sensiblement parallèle au dioptre 4,5. Ainsi, chaque portion 2,3 comprend une surface avant constituée par le dioptre 4,5, une surface arrière 8,9 qui est parallèle audit dioptre 4,5, lesdites surfaces 4, 5, 8, 9 étant reliées par une paroi secondaire 6,7 qui leur est perpendiculaire.

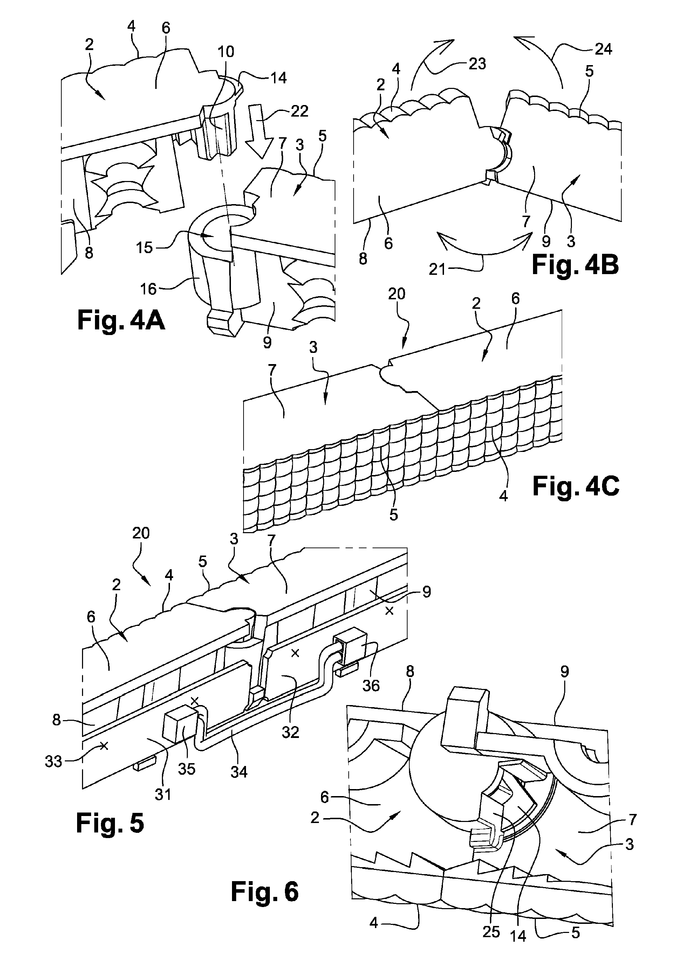

En se référant à la figure 5, chaque portion 2,3 est équipée d'une carte 31, 32 de circuit imprimé, placée au niveau de la face arrière 8,9. Chaque carte 31, 32 est rectangulaire, et s'étend sensiblement sur toute la longueur d'une portion 2, 3, de sorte que l'axe longitudinal de ladite carte 31, 32 est parallèle à l'axe longitudinal de la portion 2,3 sur laquelle elle est fixée. Chaque carte 31, 32 comporte une pluralité de sources lumineuses 33 sous la forme de diodes électroluminescentes, équitablement réparties le long de son axe longitudinal. Les diodes 33 électroluminescentes placées sur la face arrière de chaque portion 2,3 vont ainsi éclairer les dioptres 4, 5 placés sur la face avant de chacune desdites portions 2,3.

En se référant à la figure 2, l'une 2 des deux portions comprend un pion 10 prenant naissance au niveau de la paroi secondaire 6 et s'étendant à l'intérieur de ladite portion 2, parallèlement aux faces avant 4 et arrière 8. De cette manière, le pion 10 se retrouve dans l'espace délimité par les parois avant 4 et arrière 8, et par la paroi secondaire 6. Ce pion 10 possède une embase 11 de laquelle émerge un corps allongé 12 présentant au moins une nervure saillante 13 s'étendant selon un axe longitudinal dudit pion 10. Une collerette 14 est insérée entre l'embase 11 et le corps 12, ladite collerette 14 étant plane et de faible épaisseur. Cette collerette 14 s'étend partiellement autour du corps 12 du pion 10, sur un secteur angulaire limité, inférieur à 90°. Cette collerette 14 est placée perpendiculairement à l'axe longitudinal du pion 10, et émerge de l'embase 11 dudit pion 10.

En se référant à la figure 3, l'autre portion 3, celle ne comprenant pas le pion 10, possède à l'une de ses extrémités considérées par rapport à son axe longitudinal, un évidement 15 destiné à recevoir ledit pion 10. La pénétration du pion 10 dans l'évidement 15 permet d'assurer le montage desdites portions 2,3 entre elles, dans le but d'obtenir l'élément optique 20 final du feu stop 1. Cet évidement 15 est délimité par une paroi cylindrique 16 partielle, de longueur sensiblement constante. Cette paroi 16 s'étend sur un secteur angulaire légèrement supérieur à 180°, et laisse donc entrevoir une ouverture 17. Dans le prolongement de cette ouverture 17, la paroi secondaire 7 de cette portion 3 comporte des encoches 18, 19.

En se référant aux figures 4A et 4B, les formes particulières du pion 10 et de l'évidement 15 ne permettent une pénétration dudit pion 10 dans ledit évidement 15, que pour une position relative particulière entre les deux portions 2,3 constituant l'élément optique 20 du feu stop 1. En effet, lesdites portions 2,3 doivent faire entre elles un angle bien précis, comme l'indique la flèche 21 de la figure 4B, pour que le pion 10 puisse pénétrer dans ledit évidement 15. Cet angle est préférentiellement compris entre 90° et 160°. L'ouverture angulaire entre lesdites portions 2,3, pour réaliser la pénétration du pion 10 dans l'évidement 15, est dictée par les géométries particulières dudit pion 10 et dudit évidement 15. En effet, les deux portions 2, 3 doivent être positionnées l'une par rapport à l'autre, de manière à ce que le pion 10 doté de sa nervure 13 et de sa collerette 14, soit en parfaite correspondance avec l'évidement 15 dotée de son ouverture 17 et des deux encoches 18, 19.

Ainsi, en se référant aux figures 4A, 4B et 4C un procédé de montage d'un élément optique 20 d'un feu stop 1 selon l'invention, fait intervenir les principales étapes suivantes :
- une étape de positionnement relatif entre les deux portions 2,3 comme l'illustre la figure 4A, de manière à placer le pion 10 et l'évidement 15 dans le prolongement l'un de l'autre,
- une étape d'un premier mouvement en translation entre les deux portions 2,3 dans le sens indiqué par la flèche 22 de la figure 4A, de manière à faire pénétrer le pion 10 d'une portion 2 dans l'évidement 15 de l'autre portion 3,
- une étape d'un deuxième mouvement en rotation entre les deux portions 2,3, une fois que le pion 10 est logé dans l'évidement 15. Cette rotation s'effectue dans le sens indiqué par les deux flèches 23,24 de la figure 4B, et a pour but d'aligner l'axe longitudinal d'une portion 2,3 avec l'axe longitudinal de l'autre portion 2,3, comme l'illustre la figure 4C. En alignant ainsi les axes longitudinaux des deux portions 2,3, les dioptres 4,5 desdites portions 2,3 se retrouvent en parfaite continuité l'un de l'autre, sans introduire le moindre jeu entre eux.
- une étape de verrouillage entre lesdites portions 2,3 dans leurs positions alignées pour lesquelles les dioptres 4,5 sont en continuité. Cette étape est illustrée à la figure 6, et est réalisée en bout de course, à la fin de la rotation entre les deux portions 2,3, au moyen d'un encliquetage impliquant la collerette 14 du pion 10 et un bord 25 rectiligne de la paroi 16 délimitant l'évidement 15. Ce verrouillage a pour objet de maintenir les deux portions 2,3 dans une position alignée, sans possibilité de rotation inverse. Selon une variante de réalisation, ce verrouillage peut également être assuré par un crochet de liaison monté en rotation sur l'une des deux portions 2,3, et qui viendrait enserrer par pivotement un élément récepteur de l'autre partie 2,3, prévu à cet effet.
- une étape de connexion électrique entre les deux cartes 31, 32 de circuit imprimé au moyen d'un organe 34 de connexion électrique reliant un plot 35, 36 de chacune desdites cartes 31, 32,
- une étape de montage desdites portions 2,3 alignées et verrouillées, dans un boitier 26 support, constitué par une paroi plane, sensiblement rectangulaire et de faible épaisseur. L'ensemble des deux portions 2,3 est ainsi fixé audit boitier 26 par encliquetage, au niveau de deux zones 27,28 d'extrémité et d'une zone centrale 29 correspondant à la zone de liaison entre les deux portions 2,3. Cette répartition particulière des points d'ancrage des deux portions 2,3 sur le boitier 26, permet d'assurer une fixation robuste et homogène desdites portions 2,3, en équilibrant notamment les efforts produits lors de ladite fixation. Ce boitier 26 comporte quatre pattes de fixation 30 planes et de faible épaisseur, équitablement réparties le long de son axe longitudinal, lesdites pattes 30 permettant d'arrimer le feu stop 1 à l'arrière de l'habitacle d'un véhicule automobile. Ledit feu 1 se retrouve ainsi en hauteur dans ledit habitacle, dans une position pour laquelle il s'étend horizontalement, selon une direction transversale dudit véhicule.

## Revendications

1. Dispositif lumineux (1) de véhicule comprenant un élément (20) composé de plusieurs portions (2,3) présentant chacune une surface fonctionnelle (4,5), au moins deux portions (2,3) consécutives étant reliées entre elles par une articulation, **caractérisé en ce que** chaque articulation permet le déplacement desdites deux portions (2,3) consécutives jusqu'à ce que leurs surfaces fonctionnelles (4,5) viennent en continuité l'une de l'autre.

2. Dispositif lumineux de véhicule selon la revendication 1, **caractérisé en ce que** lesdites deux portions (2,3) consécutives sont montées en rotation.

3. Dispositif lumineux de véhicule selon l'une quelconque des revendications 1 ou 2, **caractérisé en ce que** lesdites deux portions consécutives (2,3) sont allongées et sont disposées les unes par rapport aux autres de manière à ce que leurs axes longitudinaux soient parallèles et de manière à ce que toutes lesdites deux portions consécutives (2,3) soient en continuité l'une de l'autre.

4. Dispositif lumineux selon la revendication 3, **caractérisé en ce que** chaque articulation est réalisée au moyen de la pénétration d'un pion (10) appartenant à l'une des deux portions consécutives (2,3), dans un évidement (15) de l'autre portion (2,3) consécutive adjacente.

5. Dispositif lumineux selon la revendication 4, **caractérisé en ce que** la pénétration du pion (10) dans l'évidement (15) ne peut être réalisée que pour une position relative donnée entre les deux portions consécutives (2,3), et pour laquelle lesdites portions consécutives (2,3) font entre elles un angle prédéterminé.

6. Dispositif lumineux selon l'une quelconque des revendications 4 à 5, **caractérisé en ce que** le pion (10) est placé à une extrémité d'une portion consécutive (2,3) et l'évidement (15) est placé à une extrémité de l'autre portion consécutive (2,3), qui lui est adjacente.

7. Dispositif lumineux selon l'une quelconque des revendications 4 à 6, **caractérisé en ce que** ledit élément (20) est obtenu au moyen d'un premier mouvement de translation pour permettre la pénétration du pion (10) dans l'évidement (15), puis par un deuxième mouvement de rotation autour dudit pion (10).

8. Dispositif lumineux selon l'une quelconque des revendications 1 à 7, **caractérisé en ce que** ledit élément est un élément optique (20).

9. Dispositif lumineux selon la revendication 8, **caractérisé en ce que** la surface fonctionnelle est un dioptre (4,5) apte à être traversé par des rayons lumineux.

10. Dispositif lumineux selon l'une quelconque des revendications 8 à 9, **caractérisé en ce que** ledit dispositif comprend une pluralité de sources lumineuses (33) réparties le long de ledit élément optique (20) et destinées à éclairer ladite surface fonctionnelle (4,5).

11. Dispositif lumineux selon l'une quelconque des revendications précédentes, **caractérisé en ce que** chaque portion (2,3) comprend une carte (31, 32) de circuit imprimé.

12. Dispositif lumineux selon la revendication 11, **caractérisé en ce que** lesdites cartes (31, 32) sont connectées électriquement entre elles.

13. Dispositif lumineux selon l'une quelconque des revendications 11 ou 12, caractérisé en que les cartes (31, 32) de circuit imprimé comprennent des sources lumineuses (33).

14. Dispositif lumineux selon l'une quelconque des revendications 10 à 13, **caractérisé en ce que** les sources lumineuses sont des diodes électroluminescentes (33).

15. Dispositif lumineux selon l'une quelconque des revendications 1 à 14, **caractérisé en ce que** lesdites deux portions consécutives (2,3) dudit élément sont maintenues dans une position pour laquelle leurs surfaces fonctionnelles (4,5) sont en continuité l'une de l'autre, par l'intermédiaire d'au moins un organe de verrouillage mécanique (14,25) situé au niveau de l'articulation.

16. Dispositif lumineux selon l'une quelconque des revendications 1 à 15, **caractérisé en ce qu'**il comprend un boitier support (26), et **en ce que** lesdites portions constitutives (2, 3) dudit élément (20) sont fixées dans ledit boitier (26), lorsqu'elles sont reliées entre elles dans une position pour laquelle leurs surfaces fonctionnelles (4, 5) sont en continuité.

17. Procédé de montage d'un dispositif lumineux selon l'une quelconque des revendications 1 à 16, **caractérisé en ce qu'**il comprend les étapes suivantes :
- une étape d'emboitement en translation d'une première portion (2, 3) dans une deuxième portion (2,3) adjacente comprenant chacune une surface fonctionnelle (4,5), lesdites portions (2, 3) faisant entre elles un angle prédéterminé pour réaliser ledit emboitement,
- une étape de mise en rotation desdites portions (2, 3) de manière à amener en continuité lesdites surfaces fonctionnelles (4, 5).

18. Feu de signalisation d'un véhicule comprenant un dispositif lumineux (1) conforme à l'une quelconque des revendications 1 à 16.

19. Feu d'éclairage intérieur d'un véhicule comprenant un dispositif lumineux (1) conforme à l'une quelconque des revendications 1 à 16.
